# FASCICULE DE BREVET EUROPEEN

(11) **EP 3 020 585 B1**
(45) Date de publication et mention de la délivrance du brevet: **04.08.2021**
(21) Numéro de dépôt: 15189626.3
(22) Date de dépôt: 13.10.2015
(51) Int. Cl.: B60J 5/04

(54) **FIXATION RÉVERSIBLE D'UN PANNEAU EXTÉRIEUR INTERCHANGEABLE D'UN OUVRANT PAR AGRAFES ET FENÊTRES DE VERROUILLAGE COOPÉRANT PAR ENCLIQUETAGE**
REVERSIBLE BEFESTIGUNG EINES ÄUSSEREN AUSTAUSCHBAREN PANEELS FÜR ÖFFNUNGSELEMENT MITHILFE VON CLIPS, UND VERRIEGELUNGSÖFFNUNGSELEMENTE, DIE SICH DARIN EINRASTEN LASSEN
RELEASABLE ATTACHMENT OF AN INTERCHANGEABLE OUTER PANEL OF AN OPENABLE BODY SECTION BY CLIPS AND LOCKING WINDOWS ENGAGING BY SNAP FITTING

(30) Priorité: 13.11.2014 FR 1460942
(43) Date de publication de la demande: 18.05.2016
(73) Titulaire: Renault S.A.S., 92100 Boulogne-Billancourt (FR)
(72) Inventeur: GREGOR, Hewak, 95490 VAUREAL (FR); BEZEAULT, Loic, 78150 LE CHESNAY (FR); CHEVALIER, Maxime, 78960 Voisins Le Bretonneux (FR)

(56) Documents cités:
- WO-A1-2011/131877
- US-A- 5 667 868
- US-A- 6 095 594
- US-B1- 6 390 533
- None

## Description

### Domaine technique de l'invention

L'invention concerne un ouvrant de véhicule automobile, notamment une porte latérale pour véhicule automobile, comprenant un caisson structurel de support, au moins un panneau extérieur interchangeable et des éléments de fixation réversible pour fixer d'une manière démontable le panneau extérieur sur une face extérieure du caisson.

L'invention a pour objet également un véhicule automobile, comprenant au moins un tel ouvrant, notamment constituant une porte latérale pour véhicule automobile avant ou arrière, gauche ou droite.

### État de la technique

La tendance actuelle des constructeurs automobiles est de proposer des services de personnalisation du véhicule automobile vendu en concession. En particulier, il est nécessaire de proposer une prestation dans laquelle un ouvrant de véhicule comporte au moins un caisson structurel de support et au moins un panneau extérieur interchangeable fixé de manière démontable sur une face extérieure du caisson. Il peut notamment en être le cas pour le hayon arrière, le capot avant, ou une porte latérale droite ou gauche avant ou arrière. Le document US 6,390,533 B1 divulgue un tel panneau extérieur interchangeable.

Il est possible de faire en sorte de disposer d'une pluralité de panneaux extérieurs interchangeables de formes différentes entre eux et/ou de couleurs différentes entre eux et/ou ayant des décors notamment par sérigraphie différents entre eux, ayant chacun une interface de montage commune à un même caisson structurel de support commun à ces différents panneaux extérieurs interchangeables.

Pour que la solution soit conviviale, il est nécessaire que le changement de carrosserie soit le moins onéreux possible, incluant le coût des pièces ainsi que le coût de main d'œuvre. Il en résulte un besoin de minimisation de ces coûts en tant que tels mais aussi que ce soit dans le cadre d'un montage en usine ou dans le cadre d'une prestation en service après-vente.

A ce jour, ces problématiques ne sont pas résolues. Dans le cas particulier d'une porte latérale, pour déposer un panneau extérieur, il est actuellement nécessaire de démonter l'intégralité des moyens de fixation du panneau extérieur sur le caisson structurel de support. Cette opération est longue et fastidieuse, la rendant onéreuse en coût de main d'œuvre et peu conviviale au final.

### Objet de l'invention

Le but de la présente invention est de proposer un ouvrant de véhicule qui remédient aux inconvénients listés ci-dessus.

Ce but peut être atteint notamment grâce à l'objet de la revendication 1.

Selon un mode de réalisation particulier, chaque agrafe provient de matière avec le reste du panneau extérieur, constituant une pièce d'un seul tenant.

Chaque fenêtre de verrouillage peut être délimitée par le caisson, les fenêtres de verrouillage et le caisson constituant une pièce d'un seul tenant.

Selon un mode de réalisation particulier, tout ou partie des fenêtres de verrouillage sont délimitées par une paroi portée par le caisson orientée de sorte à être globalement incluse dans un plan correspondant au plan principal de l'ouvrant, notamment constituée par un bord replié du caisson.

Chaque agrafe comprend une zone élastiquement déformable configurée de sorte à se déformer élastiquement durant l'encliquetage dans la fenêtre de verrouillage correspondante résultant de l'insertion d'une partie de l'agrafe dans ladite fenêtre de verrouillage et à assurer l'encliquetage de l'agrafe par un rappel élastique de ladite zone élastiquement déformable.

Selon un autre mode de réalisation, chaque agrafe varie, par déformation et retour élastique de la zone élastiquement déformable, entre une première configuration correspondant à son état encliqueté et une deuxième configuration distincte de la première configuration et dans laquelle elle peut venir occuper l'état encliqueté et sortir de son état encliqueté pour permettre de démonter le panneau extérieur, l'agrafe étant configurée de sorte que le passage de la première configuration vers la deuxième configuration se pratique par application d'un effort de traction sur l'agrafe au démontage du panneau extérieur, la zone élastiquement déformable se déformant élastiquement en cas d'application dudit effort de traction pour assurer le passage de la première à la deuxième configuration de l'agrafe et son retour élastique assurant le passage de la deuxième configuration à la première configuration de l'agrafe.

Selon l'invention, chaque agrafe comprend un pied fixé au panneau extérieur et une tête de retenue axiale opposée au pied et au panneau extérieur et bloquant axialement le caisson le long de l'agrafe. La tête et le pied de l'agrafe comportent des butées au déplacement du panneau sur le caisson, les butées étant disposées sensiblement l'une au regard de l'autre. La tête déformable est de section en V dont chacune des branches comprend au moins une zone de moindre épaisseur, les extrémités des branches du V opposées à la partie distale de jonction des branches entre elles, sont mutuellement reliées l'une à l'autre par l'intermédiaire du pied.

Les éléments de fixation réversible peuvent comprendre une pluralité de vis de fixation indépendantes des agrafes, notamment échelonnées le long d'un bord latéral avant de l'ouvrant.

Un véhicule automobile pourra comprendre au moins un tel ouvrant, notamment constituant une porte latérale pour véhicule automobile avant ou arrière, gauche ou droite.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'un exemple de caisson structurel de support d'une porte latérale constitutive d'un ouvrant selon l'invention,
- la figure 2 est une vue illustrant localement la porte latérale au niveau de l'encliquetage de l'une des agrafes dans la fenêtre de verrouillage correspondante,
- la figure 3 est une vue en perspective d'une agrafe permettant le montage réversible d'un panneau sur le caisson structurel de l'ouvrant.

### Description de modes préférentiels de l'invention

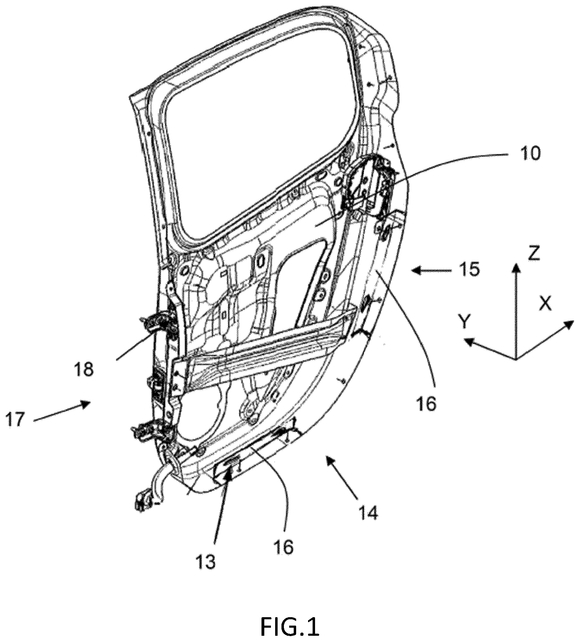

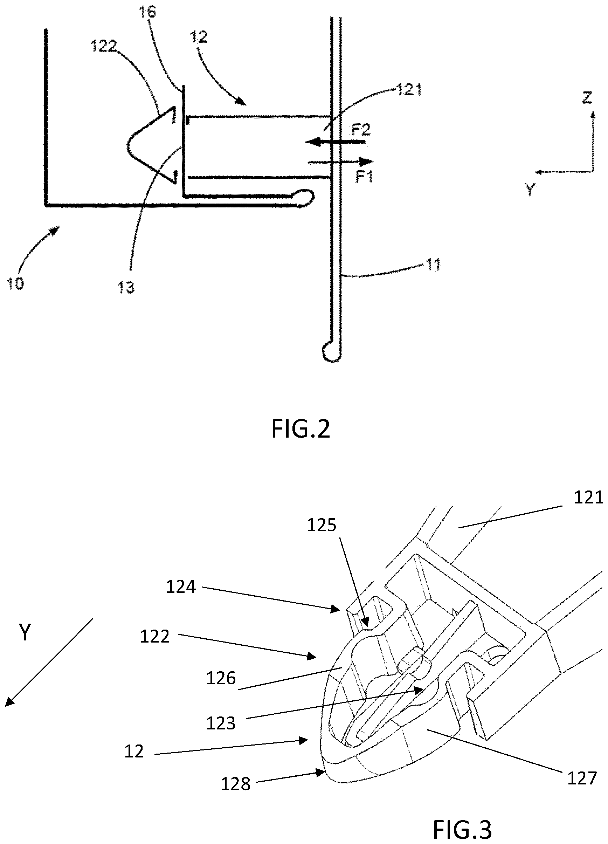

L'invention qui va maintenant être décrite, en référence aux figures 1 et 2, concerne de manière générale un ouvrant de véhicule automobile, comprenant un caisson structurel de support 10, au moins un panneau extérieur interchangeable 11 et des éléments de fixation réversible détaillés plus loin pour fixer d'une manière démontable le panneau extérieur 11 sur une face extérieure du caisson 10. Il peut notamment s'agir d'une porte latérale pour véhicule automobile. Dans le présent texte, on entend par « face extérieure » la face qui est tournée du côté extérieur, c'est-à-dire du côté latéral correspondant du véhicule, par opposition à la « face intérieure » qui est tournée vers l'intérieur du véhicule. Ainsi le panneau extérieur 11 vient recouvrir le caisson 10 en étant accolé à la face extérieure de ce dernier.

L'invention a pour objet également un véhicule automobile, comprenant au moins un tel ouvrant, notamment constituant une porte latérale pour véhicule automobile avant ou arrière, gauche ou droite.

L'invention va être décrite à l'appui des figures 1 et 2 dans le cas particulier, en aucun cas limitatif, d'un ouvrant constitutif d'une porte latérale pour véhicule automobile. Il peut s'agir d'une porte latérale droite ou gauche, avant ou arrière. Toutefois, l'invention peut aussi s'appliquer à un ouvrant constitutif d'un capot avant destiné à la fermeture d'un compartiment moteur du véhicule automobile ou à l'inverse constitutif d'un hayon arrière pour véhicule automobile.

Pour une meilleure compréhension, il est associé à la porte latérale un repère orthogonal (figure 1), dans lequel X désigne la direction longitudinale avant-arrière du véhicule, orientée vers l'arrière, Y la direction transversale du véhicule, orientée vers la droite, et Z la direction verticale, orientée vers le haut.

Le terme « interchangeable » associé au panneau extérieur correspond dans ce document à la notion d'une fixation démontable et réversible du panneau extérieur 11, en ce sens qu'il peut être retiré à souhait par l'utilisateur, au montage ou en après-vente, en fonction de caractéristiques propres au panneau extérieur 11 et sélectionnées par l'utilisateur, telles que la forme, la couleur ou un éventuel décor esthétique.

Selon une caractéristique essentielle, les éléments de fixation réversible comprennent une pluralité d'agrafes 12 solidaires du panneau extérieur 11 et une pluralité de fenêtres de verrouillage 13 solidaires du caisson structurel de support 10, chacune de ces agrafes 12 étant configurée pour coopérer par encliquetage avec l'une unique et correspondante de ces fenêtres de verrouillage 13, au moment de la mise en contact du panneau extérieur 11 contre la face extérieure du caisson 10, d'une manière assurant la fixation relative et démontable du panneau extérieur 11 par rapport au caisson 10 dans une configuration prédéfinie.

Selon un mode particulier de réalisation non limitatif quant à la liberté de mise en œuvre et de conception de la fonction d'encliquetage, chaque agrafe 12 provient de matière avec le reste du panneau extérieur 11, constituant une pièce d'un seul tenant. Autrement dit, les agrafes 12 et le panneau extérieur 11 constituent un ensemble monobloc dans lequel les agrafes 12 sont inséparables du reste du panneau extérieur 11.

Comme cela est illustré sur la figure 1, chaque fenêtre de verrouillage 13 peut de préférence être délimitée par le caisson structurel de support 10, les fenêtres de verrouillage 13 et le caisson 10 constituant une pièce d'un seul tenant. Autrement dit, les fenêtres de verrouillage 13 et le caisson 10 constituent dans cette variante un ensemble monobloc dans lequel les fenêtres de verrouillage 13 sont inséparables du reste du caisson 10. Une version présentant l'avantage cumulé de sa simplicité et de sa robustesse consiste à prévoir que tout ou partie des fenêtres de verrouillage 13 soient délimitées par une paroi 16 portée par le caisson 10 orientée de sorte à être globalement incluse dans un plan correspondant au plan principal de l'ouvrant. Cette paroi 16 peut notamment être constituée par un bord replié du caisson 10. Ainsi comme cela est visible sur la figure 1, le plan principal de l'ouvrant est, dans le cas de la porte latérale, globalement orienté selon les directions X et Z et chaque paroi 16 est incluse dans ce plan, de même que les fenêtres de verrouillage 13. L'encliquetage des agrafes 12 se pratique par un déplacement relatif de chaque agrafe 12 par rapport à la fenêtre de verrouillage 13 correspondante orienté perpendiculairement au plan des parois 16, ce qui correspond ici à la direction Y en allant de l'extérieur vers l'intérieur de la porte latérale.

Dans la variante illustrée, les agrafes 12 et les fenêtres de verrouillage 13 sont agencées de manière échelonnée le long d'un bord inférieur 14 et au moins un bord latéral 15 de l'ouvrant. Dans le cas de la porte latérale, il peut notamment s'agir d'un bord latéral arrière 15 vu dans la direction longitudinale X. Sur le bord latéral avant 17, du côté de la charnière d'articulation au reste de la caisse, un renfort de charnière (non représenté) peut être fixé au caisson structurel de support 10 par l'intermédiaire d'une pluralité de vis de fixation, dont le nombre est par exemple égal à 3.

Pour sa fonction d'encliquetage, chaque agrafe 12 comprend une zone élastiquement déformable configurée de sorte à se déformer élastiquement durant l'encliquetage dans la fenêtre de verrouillage 13 correspondante résultant de l'insertion d'une partie de l'agrafe 12 dans ladite fenêtre de verrouillage 13 et à assurer l'encliquetage de l'agrafe 12 par un rappel élastique de cette zone élastiquement déformable à la fin de l'insertion. Selon un mode de réalisation particulier, chaque agrafe 12 varie, par déformation et retour élastique de la zone élastiquement déformable, entre une première configuration correspondant à son état encliqueté et une deuxième configuration distincte de la première configuration et dans laquelle elle peut venir occuper l'état encliqueté et sortir de son état encliqueté pour permettre de démonter le panneau extérieur 11 par rapport au caisson 10. L'agrafe 12 est configurée de sorte que le passage de la première configuration vers la deuxième configuration peut se pratiquer soit par application d'un effort de traction F1 sur l'agrafe 12 et donc sur le panneau extérieur 11 au moment du démontage du panneau extérieur 11, soit par application d'un effort de poussée F2 sur l'agrafe 12 et donc sur le panneau extérieur 11 au moment de l'encliquetage. La zone élastiquement déformable se déforme élastiquement en cas d'application dudit effort de traction F1 ou dudit effort de poussée F2 pour assurer le passage de la première à la deuxième configuration de l'agrafe 12. Son retour élastique assure le passage de la deuxième configuration à la première configuration de l'agrafe 12.

Pour parvenir à un tel résultat, chaque agrafe 12 comprend un pied 121 fixé au panneau extérieur 11 et une tête de retenue axiale 122 opposée au pied 121 et au panneau extérieur 11 et bloquant axialement le caisson structurel de support 10 le long de l'agrafe 12 conjointement avec le panneau extérieur 11. La zone élastiquement déformable est agencée au niveau de la tête 122, par exemple sous la forme d'au moins une ailette radialement déformable. Dans la première configuration, la tête 122 est encliquetée dans la fenêtre de verrouillage 13 correspondante du caisson 10 (figure 2). Les dimensions périphériques de la tête 122 sont supérieures aux dimensions de la fenêtre de verrouillage 13 afin d'assurer la fonction de retenue axiale (ici selon la direction Y comme cela a été précédemment expliqué). En cas d'application d'un effort de traction F1 ayant une intensité suffisante à la valeur seuil de démontage pour laquelle l'agrafe 12 a été conçue, la zone élastiquement déformable se déforme, d'une manière réduisant les dimensions périphériques de la tête 122 suffisamment pour lui permettre de sortir de son état encliqueté : la déformation est suffisante par exemple pour réduire le diamètre externe de la tête 122 pour libérer axialement la tête 122 par rapport à la fenêtre de verrouillage 13 en lui permettant de coulisser à travers la fenêtre de verrouillage 13 sous l'effet de l'effort de traction F1. L'application de l'effort de traction F1 sur les agrafes 12 peut notamment résulter d'une traction appliquée sur le panneau extérieur 11 dans son ensemble.

Selon l'invention l'agrafe 12, la tête 122 et le pied 121 comportent des butées 124, 125 au déplacement du panneau 11 sur le caisson 10, les butées étant disposées sensiblement l'une au regard de l'autre. Dans l'état de montage du panneau 11 sur la paroi 16 du caisson 10, chacune des têtes 122 s'étend au travers d'une ouverture de telle sorte qu'au niveau de chaque agrafe 12, la paroi 16 du caisson 10 est intercalée entre deux butées 124, 125 d'axe Y de l'agrafe.

La butée 125 portée par la tête 122 est voisine selon un axe Y d'une rampe extérieure d'inclinaison qui s'étend de l'extrémité libre de la tête 122, à savoir sa partie distale 128, jusqu'à la butée 125 en Y. La butée 125 de la tête 122 comprend une surface d'appui qui est inclinée par rapport à un axe perpendiculaire à l'axe Y de sorte à former une rampe de butée contre laquelle la paroi 16 du caisson est destinée à venir en appui. La pente de la rampe extérieure étant inférieure à celle opposée de la rampe de butée, l'effort de traction F1 permettant d'extraire le panneau 11 du caisson 10 est supérieur à l'effort de poussée F2.
Pour passer de la première configuration à la deuxième configuration, la tête 122 se déforme selon un rapprochement des parois de la tête 122 selon un axe perpendiculaire à l'axe Y.
La tête 122 déformable est de section en V selon un plan de coupe transversal parallèle à l'axe Y. Les extrémités des branches 126, 127 du V, opposées à la partie distale 128 de jonction des branches entre elles, sont mutuellement reliées l'une à l'autre par l'intermédiaire du pied 121.
Chaque branche 126 ou 127 du V peut comprendre au moins une zone 123 de moindre épaisseur, telle une rainure adaptée à une déformation élastique d'une branche du V lorsque la tête 122 est soumise à un effort de traction F1 ou de poussée F2.

Selon une variante envisageable, efficace, conviviale et peu onéreuse, les éléments de fixation réversible comprennent une pluralité de vis de fixation 18 indépendantes et distinctes des agrafes 12, notamment échelonnées le long du bord latéral avant 17 de l'ouvrant. Les vis de fixation 18 assurent un blocage positif en position du panneau extérieur 11 à l'état encliqueté des agrafes 12. Contrairement à l'art antérieur, le nombre de telles vis de fixation qui coopèrent par vissage avec un écrou associé non représenté solidaire du caisson 10 ou du panneau extérieur 11, est très réduit, par exemple égal à 2 ou à 3.

L'utilisation de l'ouvrant pour véhicule automobile peut correspondre à la mise en œuvre des étapes décrites ci-après.

Le procédé d'assemblage de l'ouvrant de véhicule automobile, notamment d'une telle porte latérale pour véhicule automobile, comprend une étape de fixation réversible dudit au moins un panneau extérieur interchangeable 11 sur la face extérieure du caisson structurel de support 10 mettant en œuvre, au moment de la mise en contact du panneau extérieur 11 contre la face extérieure du caisson 10, une étape d'encliquetage entre elles de la pluralité d'agrafes 12 solidaires du panneau extérieur 11 et de la pluralité de fenêtres de verrouillage 13 solidaires du caisson 10, d'une manière assurant la fixation relative et démontable du panneau extérieur 11 par rapport au caisson 10 dans la configuration prédéfinie précédemment mentionnée.

Un kit de personnalisation pour ouvrant de véhicule automobile comprendra une pluralité de panneaux extérieurs interchangeables 11 de formes différentes entre eux et/ou de couleurs différentes entre eux et/ou ayant des décors notamment par sérigraphie différents entre eux, ayant chacun une interface de montage commune à un même caisson structurel de support 10 commun à cette pluralité de panneaux extérieurs interchangeables 11. Un tel kit de personnalisation est notamment adapté à une porte latérale pour véhicule automobile telle que décrite précédemment.

La solution d'assemblage décrite précédemment permet de réduire le nombre de vis nécessaires par rapport aux solutions existantes. De manière plus générale, le nombre de pièces nécessaires à la réalisation de cette solution est faible. Elle est donc peu coûteuse. L'opération de changement d'un panneau extérieur interchangeable 11 est beaucoup plus rapide que dans les solutions actuelles.

## Revendications

1. Ouvrant de véhicule automobile, notamment porte latérale pour véhicule automobile, comprenant un caisson structurel de support (10), au moins un panneau extérieur interchangeable (11) et des éléments de fixation réversible pour fixer d'une manière démontable le panneau extérieur (11) sur une face extérieure du caisson (10), les éléments de fixation réversible comprennent une pluralité d'agrafes (12) solidaires du panneau extérieur (11) et une pluralité de fenêtres de verrouillage (13) solidaires du caisson (10), chacune desdites agrafes (12) étant configurée pour coopérer par encliquetage avec l'une unique et correspondante desdites fenêtres de verrouillage (13), au moment de la mise en contact du panneau extérieur (11) contre la face extérieure du caisson (10), d'une manière assurant la fixation relative et démontable du panneau extérieur (11) par rapport au caisson (10) dans une configuration prédéfinie et les agrafes (12) et les fenêtres de verrouillage (13) sont agencées de manière échelonnée le long d'un bord inférieur (14), chaque agrafe (12) comprend un pied (121) fixé au panneau extérieur (11), une tête de retenue axiale (122) opposée au pied (121) et au panneau extérieur (11), et bloquant axialement le caisson (10) le long de l'agrafe (12), la tête (122) et le pied (121) comprenant des butées (124, 125) au déplacement du panneau (11) sur le caisson (10), les butées étant disposées l'une au regard de l'autre, ledit ouvrant étant **caractérisé en ce que** les agrafes et les fenêtres de verrouillage sont également agencées de manière échelonnée le long d'au moins un bord latéral de l'ouvrant, et **en ce que** la tête (122) déformable est de section en V dont chacune des branches (126, 127) comprend au moins une zone (123) de moindre épaisseur, les extrémités des branches (126, 127) du V opposées à la partie distale (128) de jonction des branches entre elles, sont mutuellement reliées l'une à l'autre par l'intermédiaire du pied (121).

2. Ouvrant de véhicule automobile selon la revendication 1, **caractérisé en ce que** chaque agrafe (12) provient de matière avec le reste du panneau extérieur (11), constituant une pièce d'un seul tenant.

3. Ouvrant de véhicule automobile selon l'une des revendications 1 ou 2, **caractérisé en ce que** chaque fenêtre de verrouillage (13) est délimitée par le caisson (10), les fenêtres de verrouillage (13) et le caisson (10) constituant une pièce d'un seul tenant.

4. Ouvrant de véhicule automobile selon la revendication 3, **caractérisé en ce que** tout ou partie des fenêtres de verrouillage (13) sont délimitées par une paroi (16) portée par le caisson (10) orientée de sorte à être globalement incluse dans un plan correspondant au plan principal de l'ouvrant, notamment constituée par un bord replié du caisson (10).

5. Ouvrant de véhicule automobile selon l'une des revendications 1 à 4, **caractérisé en ce que** chaque agrafe (12) comprend une zone élastiquement déformable configurée de sorte à se déformer élastiquement durant l'encliquetage dans la fenêtre de verrouillage (13) correspondante résultant de l'insertion d'une partie de l'agrafe (12) dans ladite fenêtre de verrouillage (13) et à assurer l'encliquetage de l'agrafe (12) par un rappel élastique de ladite zone élastiquement déformable.

6. Ouvrant de véhicule automobile selon la revendication 5, **caractérisé en ce que** chaque agrafe (12) varie, par déformation et retour élastique de la zone élastiquement déformable, entre une première configuration correspondant à son état encliqueté et une deuxième configuration distincte de la première configuration et dans laquelle elle peut venir occuper l'état encliqueté et sortir de son état encliqueté pour permettre de démonter le panneau extérieur (11), l'agrafe (12) étant configurée de sorte que le passage de la première configuration vers la deuxième configuration se pratique par application d'un effort de traction (F1) sur l'agrafe (12) au démontage du panneau extérieur (11), la zone élastiquement déformable se déformant élastiquement en cas d'application dudit effort de traction (F1) pour assurer le passage de la première à la deuxième configuration de l'agrafe (12) et son retour élastique assurant le passage de la deuxième configuration à la première configuration de l'agrafe (12).

7. Ouvrant de véhicule automobile selon l'une des revendications 1 à 6, **caractérisé en ce que** les éléments de fixation réversible comprennent une pluralité de vis de fixation (18) indépendantes des agrafes (12), notamment échelonnées le long d'un bord latéral avant (17) de l'ouvrant.

8. Véhicule automobile, comprenant au moins un ouvrant selon l'une quelconque des revendications précédentes, notamment constituant une porte latérale pour véhicule automobile avant ou arrière, gauche ou droite.

## Patentansprüche

1. Öffnungselement eines Kraftfahrzeugs, insbesondere Seitentür für ein Kraftfahrzeug, welches einen strukturellen Tragkasten (10), wenigstens ein austauschbares äußeres Paneel (11) und Elemente zur reversiblen Befestigung, um das äußere Paneel (11) auf eine demontierbare Weise auf einer Außenseite des Kastens (10) zu befestigen, umfasst, wobei die Elemente zur reversiblen Befestigung eine Vielzahl von Clips (12), die mit dem äußeren Paneel (11) fest verbunden sind, und eine Vielzahl von Verriegelungsfenstern (13), die mit dem Kasten (10) fest verbunden sind, umfassen, wobei jeder der Clips (12) dafür ausgelegt ist, zum Zeitpunkt der Kontaktherstellung des äußeren Paneels (11) mit der Außenseite des Kastens (10) durch Einrasten mit dem einen, einzigen und entsprechenden der Verriegelungsfenster (13) auf eine Weise zusammenzuwirken, welche die relative und lösbare Befestigung des äußeren Paneels (11) in Bezug auf den Kasten (10) in einer vordefinierten Konfiguration sicherstellt, und die Clips (12) und die Verriegelungsfenster (13) in regelmäßigen Abständen entlang eines unteren Randes (14) angeordnet sind, jeder Clip (12) einen Fuß (121), der an dem äußeren Paneel (11) befestigt ist, und einen axialen Haltekopf (122), der dem Fuß (121) und dem äußeren Paneel (11) gegenüberliegt und den Kasten (10) entlang des Clips (12) axial blockiert, umfasst, wobei der Kopf (122) und der Fuß (121) Anschläge (124, 125) für die Bewegung des Paneels (11) auf dem Kasten (10) umfassen, wobei die Anschläge einander gegenüberliegend angeordnet sind, wobei das Öffnungselement **dadurch gekennzeichnet ist, dass** die Clips und die Verriegelungsfenster ebenfalls in regelmäßigen Abständen entlang wenigstens eines seitlichen Randes des Öffnungselements angeordnet sind, und dadurch, dass der verformbare Kopf (122) einen V-förmigen Querschnitt aufweist, von dem jeder der Schenkel (126, 127) wenigstens einen Bereich (123) geringerer Dicke umfasst, und die Enden der Schenkel (126, 127) des "V", die dem distalen Teil (128) der Stelle der Verbindung der Schenkel miteinander gegenüberliegen, durch den Fuß (121) miteinander verbunden sind.

2. Öffnungselement eines Kraftfahrzeugs nach Anspruch 1, **dadurch gekennzeichnet, dass** jeder Clip (12) stoffschlüssig mit dem Rest des äußeren Paneels (11) verbunden ist und mit ihm ein einstückiges Teil bildet.

3. Öffnungselement eines Kraftfahrzeugs nach einem der Ansprüche 1 oder 2, **dadurch gekennzeichnet, dass** jedes Verriegelungsfenster (13) von dem Kasten (10) begrenzt wird, wobei die Verriegelungsfenster (13) und der Kasten (10) ein einstückiges Teil bilden.

4. Öffnungselement eines Kraftfahrzeugs nach Anspruch 3, **dadurch gekennzeichnet, dass** alle Verriegelungsfenster (13) oder ein Teil von ihnen von einer von dem Kasten (10) getragenen Wand (16) begrenzt werden, die so ausgerichtet ist, dass sie im Wesentlichen in einer der Hauptebene des Öffnungselements entsprechenden Ebene enthalten ist, und die insbesondere aus einem umgebogenen Rand des Kastens (10) besteht.

5. Öffnungselement eines Kraftfahrzeugs nach einem der Ansprüche 1 bis 4, **dadurch gekennzeichnet, dass** jeder Clip (12) einen elastisch verformbaren Bereich umfasst, der so gestaltet ist, dass er sich während des Einrastens in das entsprechende Verriegelungsfenster (13), das aus dem Einsetzen eines Teils des Clips (12) in das Verriegelungsfenster (13) resultiert, elastisch verformt und das Einrasten des Clips (12) durch eine elastische Rückfederung des elastisch verformbaren Bereichs sicherstellt.

6. Öffnungselement eines Kraftfahrzeugs nach Anspruch 5, **dadurch gekennzeichnet, dass** sich jeder Clip (12) durch Verformung und elastische Rückfederung des elastisch verformbaren Bereichs verändert zwischen einer ersten Konfiguration, die seinem eingerasteten Zustand entspricht, und einer zweiten Konfiguration, die von der ersten Konfiguration verschieden ist und in welcher er den eingerasteten Zustand einnehmen kann und seinen eingerasteten Zustand verlassen kann, um das Demontieren des äußeren Paneels (11) zu ermöglichen, wobei der Clip (12) derart gestaltet ist, dass der Übergang von der ersten Konfiguration zur zweiten Konfiguration durch Ausübung einer Zugkraft (F1) auf den Clip (12) bei der Demontage des äußeren Paneels (11) erfolgt, wobei sich der elastisch verformbare Bereich im Fall der Ausübung der Zugkraft (F1) elastisch verformt, um den Übergang von der ersten zur zweiten Konfiguration des Clips (12) und seine elastische Rückfederung, die den Übergang von der zweiten Konfiguration zur ersten Konfiguration des Clips (12) sicherstellt, zu gewährleisten.

7. Öffnungselement eines Kraftfahrzeugs nach einem der Ansprüche 1 bis 6, **dadurch gekennzeichnet, dass** die Elemente zur reversiblen Befestigung eine Vielzahl von Befestigungsschrauben (18), die von den Clips (12) unabhängig sind und insbesondere in regelmäßigen Abständen entlang eines vorderen seitlichen Randes (17) des Öffnungselements angeordnet sind, umfassen.

8. Kraftfahrzeug, welches wenigstens ein Öffnungselement nach einem der vorhergehenden Ansprüche umfasst, das insbesondere eine vordere oder hintere, linke oder rechte Seitentür für das Kraftfahrzeug bildet, umfasst.

## Claims

1. Motor vehicle opening leaf, in particular a side door for a motor vehicle, comprising a structural support casing (10), at least one interchangeable outer panel (11) and reversible fastening elements for removably fastening the outer panel (11) to an outer face of the casing (10), the reversible fastening elements comprising a plurality of clips (12) as one with the outer panel (11) and a plurality of locking apertures (13) as one with the casing (10), each of said clips (12) being configured to cooperate by snap-fastening with the single corresponding one of said locking apertures (13), when the outer panel (11) is brought into contact with the outer face of the casing (10), in a manner ensuring the relative removable fastening of the outer panel (11) with respect to the casing (10) in a predefined configuration, and the clips (12) and the locking apertures (13) being arranged so that they are staggered along a lower edge (14), each clip (12) comprising a foot (121) fastened to the outer panel (11), an axial retaining head (122) that is at the opposite end to the foot (121) and the outer panel (11) and axially immobilizes the casing (10) along the clip (12), the head (122) and the foot (121) comprising stops (124, 125) preventing movement of the panel (11) on the casing (10), the stops being disposed facing one another, said opening leaf being **characterized in that** the clips and the locking apertures are also arranged so that they are staggered along at least one lateral edge of the opening leaf, and **in that** the deformable head (122) has a V-shaped section of which each of the legs (126, 127) comprises at least one zone (123) of reduced thickness, the ends of the legs (126, 127) of the V that are at the opposite end to the distal part (128) that joins the legs together are mutually connected to one another by way of the foot (121).

2. Motor vehicle opening leaf according to Claim 1, **characterized in that** each clip (12) is formed integrally with the rest of the outer panel (11), constituting a component made in one piece.

3. Motor vehicle opening leaf according to either of Claims 1 and 2, **characterized in that** each locking aperture (13) is delimited by the casing (10), the locking apertures (13) and the casing (10) constituting a component made in one piece.

4. Motor vehicle opening leaf according to Claim 3, **characterized in that** all or some of the locking apertures (13) are delimited by a wall (16) that is borne by the casing (10) and is oriented so as to be generally included in a plane corresponding to the main plane of the opening leaf, which wall is in particular constituted by a folded edge of the casing (10).

5. Motor vehicle opening leaf according to one of Claims 1 to 4, **characterized in that** each clip (12) comprises an elastically deformable zone configured so as to deform elastically during the snap-fastening into the corresponding locking aperture (13) that results from the insertion of a part of the clip (12) into said locking aperture (13) and so as to ensure the snap-fastening of the clip (12) by elastic return of said elastically deformable zone.

6. Motor vehicle opening leaf according to Claim 5, **characterized in that** each clip (12) varies, by deformation and elastic return of the elastically deformable zone, between a first configuration corresponding to its snap-fastened state and a second configuration that is distinct from the first configuration and in which it can come to occupy the snap-fastened state and leave its snap-fastened state so as to allow the outer panel (11) to be removed, the clip (12) being configured such that the transition from the first configuration to the second configuration is carried out by application of a tensile force (F1) to the clip (12) upon removal of the outer panel (11), the elastically deformable zone deforming elastically in the event of application of said tensile force (F1) so as to ensure the transition of the clip (12) from the first to the second configuration, and the elastic return of the zone ensuring the transition of the clip (12) from the second configuration to the first configuration.

7. Motor vehicle opening leaf according to one of Claims 1 to 6, **characterized in that** the reversible fastening elements comprise a plurality of fastening screws (18) independent of the clips (12), which screws are in particular staggered along a front lateral edge (17) of the opening leaf.

8. Motor vehicle, comprising at least one opening leaf according to any one of the preceding claims, which opening leaf in particular constitutes a front or rear, left or right side door for a motor vehicle.
